## Europäisches Patentamt
## European Patent Office
## Office européen des brevets

(19)

(11) Numéro de publication: **0 148 702**
**B1**

(12) # FASCICULE DE BREVET EUROPÉEN

(45) Date de publication du fascicule du brevet:
**22.07.87**

(51) Int. Cl.⁴: **H 02 K 15/00,** H 02 K 5/14

(21) Numéro de dépôt: **84402731.8**

(22) Date de dépôt: **27.12.84**

(54) **Moteur électrique, notamment pour accessoire de véhicule.**

(30) Priorité: **09.01.84 FR 8400224**

(43) Date de publication de la demande:
**17.07.85 Bulletin 85/29**

(45) Mention de la délivrance du brevet:
**22.07.87 Bulletin 87/30**

(84) Etats contractants désignés:
**DE GB IT SE**

(56) Documents cité:
**DE-A-1 227 130**
**FR-A-1 478 923**
**FR-A-1 578 369**
**FR-A-2 249 468**
**FR-A-2 282 182**
**US-A-3 924 147**

(73) Titulaire: **ACIERS ET OUTILLAGE PEUGEOT
Société dite:, F-25400 Audincourt (Doubs) (FR)**

(72) Inventeur: **Giral, Henri, 35 Rue de Vandoncourt,
F-25400 Audincourt (FR)**

(74) Mandataire: **Moncheny, Michel, c/o Cabinet
Lavoix 2 Place d'Estienne d'Orves, F-75441 Paris
Cedex 09 (FR)**

EP 0 148 702 B1

LIBER, STOCKHOLM 1987

## Description

La présente invention se rapporte aux moteurs électriques tels qu'utilisés par exemple pour actionner des accessoires d'automobiles.

Ces moteurs électriques comprennent notamment un carter dans lequel sont disposés une culasse, des aimants permanents et un induit solidaire d'un arbre de sortie portant également un collecteur, carter sur lequel est fixée une plaque portant elle même des balais sollicités radialement par des ressorts en direction du collecteur. Dans les moteurs connus, l'agencement de ces divers composants est tel qu'il est nécessaire de monter dans un premier temps la plaque porte-balais, puis dans un deuxième temps les balais eux-même, leurs ressorts et des pièces d'appui pour ces ressorts. Cette dernière opération de montage des balais étant manuelle et devant être effectuée sur la chaine de fabrication, il en résulte une perte de temps et une augmentation des coûts.

Pour résoudre ces problèmes, on connait d'après le brevet US-A-3 924 147 un dispositif du type "frein de balais". Cependant ce dispositif est directement intégré à chaque guide de balais ce qui présente certains inconvénients lors du montage. Le brevet FR-A-1 578 369 décrit un dispositif de maintien en place des balais, cependant ce dispositif est uniquement utilisé lors de l'assemblage à l'extérieur du moteur, du sous-ensemble plaque porte-balais, ce dispositif ne reste donc pas dans le moteur lorsque la plaque porte-balais est mise en place. Par ailleurs, le brevet FR-A-1 478 923 décrit un dispositif de maintien en place des balais, lors d'un éventuel remplacement desdits balais, n'assurant qu'un blocage passif sur l'une des faces latérales des balais.

Enfin, on connait également d'après le document US-A-4 293 789 un moteur électrique comprenant un carter dans lequel sont disposés, une culasse, des aimants permanents et un induit solidaire d'un arbre portant également un collecteur et une plaque fixée sur le carter et portant des balais sollicités par des moyens élastiques radialement en direction du collecteur.

Un organe de retenue temporaire des balais en position escamotée est également prévu. Cet organe de retenue est constitué par une pièce montée déplacable axialement entre la position de retenue des balais et une position escamotée de libération des balais lors du montage de la plaque sur le reste du moteur, la face avant du collecteur servant de butée pour déplacer ledit organe.

Cependant ce dispositif présente un certain nombre d'inconvénients au niveau de son encombrement, de sa fiabilité et de sa facilité de mise en oeuvre.

Le but de l'invention est donc de proposer un dispositif qui permet de remédier à ces inconvénients et de rendre entièrement automatiques les opérations de montage de tels moteurs.

A cet effet l'invention a pour objet un moteur électrique, comprenant un carter dans lequel sont disposés une culasse, des aimants permanents et un induit, solidaire d'un arbre portant également un collecteur, et une plaque fixée sur le carter et portant des balais sollicités par des moyens élastiques radialement en direction du collecteur, ledit moteur comportant également un sous-ensemble comprenant la plaque porte-balais des balais disposés dans des logements à peu près radiaux de cette plaque, des ressorts sollicitant les balais radialement vers l'axe du moteur, des pièces d'appui pour les ressorts, fixées sur la plaque et un organe de retenue temporaire des balais, qui, dans une première position, obture les extrémités internes desdits logements et maintient les balais en position effacée et qui, dans une seconde position, libère les balais et leur permet de venir en contact avec le collecteur, caractérisé en ce que l'organe de retenue est une bague portant deux languettes axiales destinées à obturer lesdits logements, et montée déplaçable à rotation entre lesdites première et seconde positions et comportant des moyens la rendant solidaire axialement de la plaque et un doigt d'entraînement, permettant de l'amener en position de libération des balais.

Suivant d'autres carctéristiques:

- il est prévu un disque de maintien d'un coussinet de l'arbre et ce disque et la plaque porte-balais sont rendus solidaires par une liaison à baïonnette;

- le disque de maintien du coussinet constitue un ressort du type à diaphragme;

- l'organe de retenue est rendu solidaire axialement de la plaque porte-balais et comporte un doigt axial qui traverse une lumière circonférentielle ménagée dans la plaque porte-balais, pour venir en prise avec des moyens complémentaires prévus sur le disque de maintien.

L'invention va être décrite plus en détail ci-dessous en se référant aux dessins annexés donnés uniquement à titre d'exemple et sur lesquels:

- la Fig. 1 est une vue en coupe longitudinale du moteur à un stade intermédiaire de son montage, selon la ligne 1-1 de la Fig. 4;

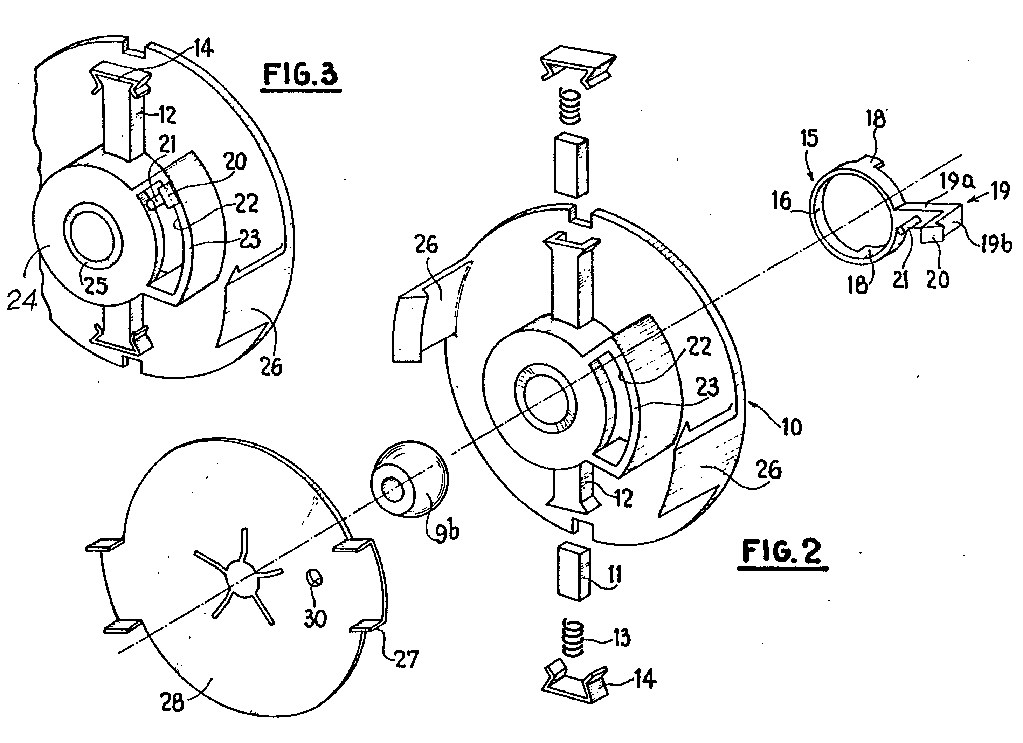

- la Fig.2 est une vue en perspective éclatée représentant certains des constituants du moteur de la Fig.1;

- la Fig.3 est vue en perspective du sous-ensemble porte-baiais;

- les Fig.4 et 5 sont des vues de face du moteur en cours de montage, respectivement avant et après assemblage du disque de maintien du coussinet;

- la Fig.6 est une vue en coupe suivant la ligne 6-6 de la Fig.5;

- la Fig.7 est une vue de dessus détaillée suivant la flèche F de la Fig.1 de la fixation de la plaque porte-balais au carter du moteur.

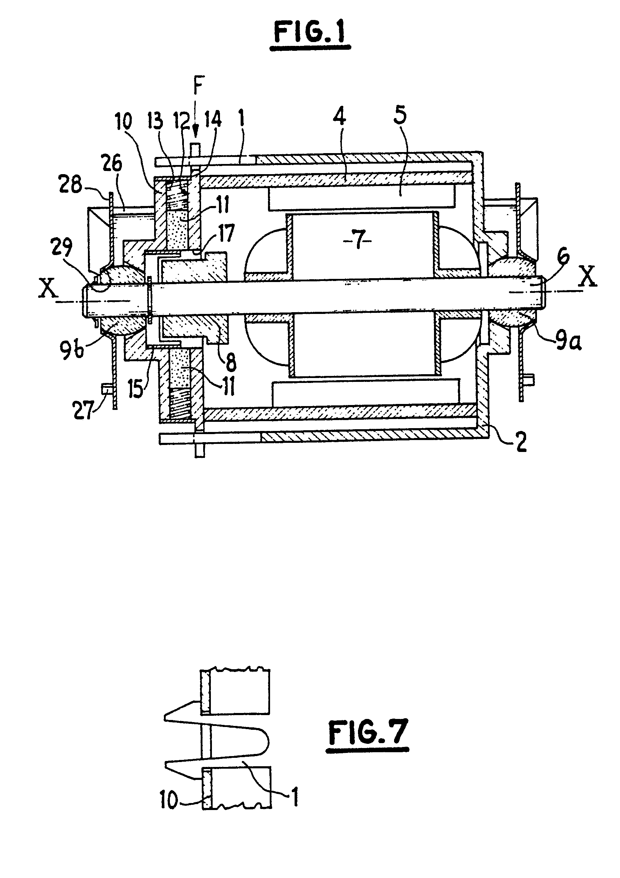

On voit sur le dessin et en particulier sur la Fig.1, un moteur électrique presque assemblé comportant principalement un carter 1 fermé à une de ces extrémités par un couvercle 2, et dans lequel sont logés une culasse 4, des aimants 5 et un arbre 6 d'axe X-X portant un induit 7 et un collecteur 8 et tourillonné dans deux coussinets 9a, 9b.

Ce moteur comporte également une plaque 10 porte-balais et c'est de l'agencement particulier de cette plaque porte-balais et des constituants adjacents que traite plus particulièrement l'invention. C'est ainsi que la plaque 10, les balais 11 reçus dans des logements radiaux 12 de la plaque, des ressorts 13 et des organes 14 d'appui et de maintien de ces ressorts constituent, avec un organe de retenue 15 un sous-ensemble qui peut être monté avant les opérations d'assemblage du moteur sur une chaîne automatisée.

L'organe de retenue 15 comporte une bague cylindrique 16 ayant un diamètre intermédiaire entre celui du collecteur 8 et du logement 17 de la plaque 10 dans lequel il est reçu. Cette bague est prolongée par deux languettes 18 diamétralement opposées et qui, dans la position représentée à la Fig.1 obturent les logements 12 et maintiennent les balais 11 éloignés du collecteur 8. La bague 16 porte également une patte en L 19 formée d'un bras radial 19a et d'un bras axial 19b terminé par un crochet 20.

A partir du bras 19a s'étend un doigt axial 21. Le bras 19b et le doigt 21 s'étendent tous deux dans la direction opposée à celle des languettes 18 et traversent une lumière circonférentielle 22 ménagée dans la plaque 10. Le crochet 20 vient en prise sur le bord 23 de cette lumière, tandis que le doigt 21 fait saillie axialement au-delà d'un prolongement axial 24 de la plaque 10. Ce prolongement, traversé par l'arbre 6 délimite une surface de portée 25 pour le coussinet 9b.

La plaque porte-balais 10 comporte de plus à sa périphérie deux crochets 26 diamétralement opposés et s'étendant axialement. Ces deux crochets sont décalés angulairement par rapport aux logements 12 et sont destinés à coopérer avec des pattes complémentaires 27 ayant une forme en U et prévues sur un disque 28. Ce disque est réalisé sous la forme d'un ressort à diaphragme traversé par l'arbre 6 et délimitant au voisinage de sa périphérie interne une surface concave 29 servant d'appui au coussinet 9b.

Un orifice 30 destiné à recevoir l'extrémité du doigt axial 21 de l'organe de retenue 15 est ménagé dans le disque 28. De préférence, cet orifice est situé à peu près sur le même diamètre que les pattes 27.

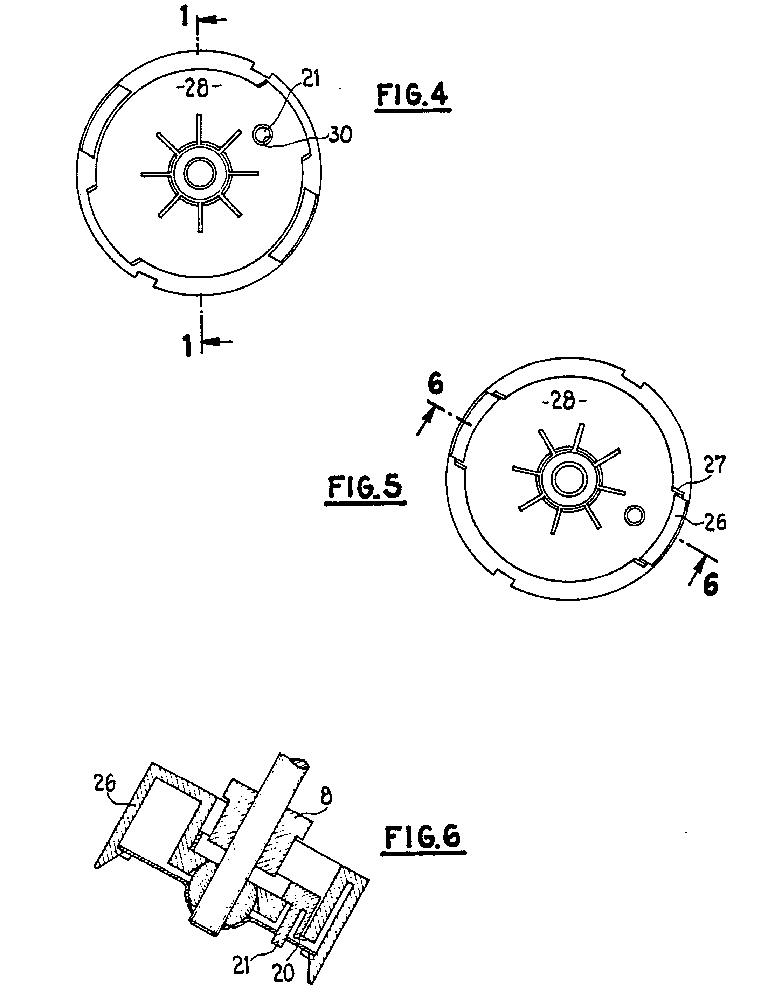

Suivant l'invention, préalablement aux opérations de montage proprement dites du moteur sur une chaîne entièrement automatisée, on réalise un sous-ensemble constitué par la plaque porte-balais 10, les balais 11, les ressorts 13, les pièces d'appui 14 pour ces ressorts et l'organe de retenue 15. Ce dernier est maintenu axialement sur la plaque 10 au moyen du crochet 20. Ce sous-ensemble peut être aisément manipulé et, sur la chaîne de montage, en supposant que l'assemblage du moteur est effectué à partir de son extrémité de droite sur le dessin, le sous-ensemble précité est mis en place comme représenté sur la Fig.1 et peut s'engager librement sur le collecteur 8. Puis on dispose le coussinet 9b et le disque 28, ce dernier étant présenté dans la position de la Fig.4, pour laquelle l'orifice 30 reçoit l'extrémité du doigt 21.

Au cours de l'opération suivante, ce disque 28 est amené, sous l'effet d'une rotation et d'une légère déformation axiale dans la position de la Fig.5 pour laquelle les pattes 2 ont été amenées sous les crochets 26. Au cours de cette rotation, le doigt 21 est entraîné par rapport à la plaque 10, ce qu'autorise la lumière 22, et ce déplacement angulaire de l'organe 15 écarte les languettes 18 des extrémités internes des logements 12 et libère ainsi les balais 11 qui viennent en appui sur le collecteur 8.

Les opérations d'assemblage du moteur se poursuivent jusqu'à obtenir un ensemble entièrement monté.

Il résulte de cette description que les objectifs recherchés sont bien atteints: en effet, par des moyens simples on peut rendre entièrement automatiques les opérations effectuées sur la chaîne de montage du moteur. De plus, de façon avantageuse, le dégagement de l'organe de retenue temporaire 15 est réalisé au moyen de l'un des constituants du moteur et au cours d'une opération qui, en tout état de cause, est indispensable au montage.

Bien entendu, certaines variantes peuvent être apportées au dispositif décrit ci-dessus. C'est ainsi que le dégagement de la pièce de retenue temporaire des balais peut être effectué par translation axiale et en utilisant le cas échéant un organe autre que le disque d'appui du coussinet.

## Revendications

1. Moteur électrique, comprenant un carter (1) dans lequel sont disposés une culasse (4), des aimants permanents (5) et un induit (7), solidaire d'un arbre (6) portant également un collecteur (8), et une plaque (10) fixée sur le carter (1) et portant des balais (11) sollicités par des moyens élastiques (13, 14) radialement en direction du collecteur, ledit moteur comportant également un sous-ensemble comprenant la plaque porte-balais (10), des balais (11) disposés dans des logements (12) à peu près radiaux de cette plaque (10), des ressorts (13) sollicitant les balais radialement vers l'axe (X-X) du moteur, des pièces d'appui (14) pour les ressorts (13), fixées sur la plaque (10) et un organe (15) de retenue temporaire des balais, qui, dans une première position, obture les extrémités internes desdits logements (12) et maintient les balais (11) en position effacée et qui, dans une seconde position, libère les balais (11) et leur permet de venir en contact avec le collecteur (8), caractérisé en ce que l'organe (15) de retenue est une bague (16) portant deux languettes axiales (18) destinées à obturer lesdits logements (12) et montée deplaçable à rotation entre lesdites première et seconde positions, et comportant des moyens (20) la rendant solidaire axialement de la plaque (10) et un doigt d'entraînement (21), permettant de l'amener en position de libération des balais

2. Moteur suivant la revendication 1, caractérisé en ce que la bague (16) porte un bras radial (19ᵃ) à partir duquel s'étendent un bras axial (19ᵇ) terminé par un crochet (20) coopérant avec un rebord (23) de la plaque (10), et le doigt d'entraînement (21).

3. Moteur suivant la revendication 1 ou 2, caractérisé en ce qu'il comprend un disque (28) de maintien d'un coussinet (9ᵇ) de l'arbre (6), qui coopère avec l'organe de retenue (15) pour l'amener dans sa position de libération des balais.

4. Moteur suivant la revendication 3, caractérisé en ce que le disque (28) comporte un orifice (30) dans lequel est reçue l'extrémité libre du doigt d'entraînement (21) de l'organe de retenue (15).

5. Moteur suivant la revendication 3, caractérisé en ce que le disque (28) est relié à la plaque (10) par une liaison du type à baïonnette.

6. Moteur suivant la revendication 5, caractérisé en ce que la liaison à baïonnette est constituée par au moins deux crochets (26) s'étendant à partir de la plaque (10) et sur lesquels viennent en prise deux pattes (27) du disque (28).

7. Moteur suivant la revendication 6, caractérisé en ce que le disque (28) est réalisé sous la forme d'un ressort à diaphragme.


**Patentansprüche**

1. Elektromotor, mit einem Gehäuse (1), in welchem ein Joch (4), Dauermagnete (5) und ein fest mit einer Welle (6) verbundener Läufer (7) vorgesehen sind, wobei an der Welle (6) ein Kommutator (8) angeordnet ist, mit einer an dem Gehäuse (1) befestigten, mit Bürsten (11) versehenen Platte, wobei die Bürsten (11) mittels elastischer Elemente(13,14) radial in Richtung des Kommutators beaufschlagt werden, mit einem Teilsystem, welches eine Bürstenplatte (10), in Aufnahmevorrichtungen (12) nahezu radial zu der Platte (10) angeordnete Bürsten (11), die Bürsten radial zur Achse (X-X) des Motors beanspruchende Federn (13), an der Platte (10) befestigte Halteelemente (14) für die Federn (13) und ein Element (15) zum kurzzeitigen Arretieren der Bürsten aufweist, wobei das Element in einer ersten Position die inneren Enden der Aufnahmevorrichtungen (12) verschließt und die Bürsten (11) in der Nullposition hält und in einer zweiten Position die Bürsten (11) löst, so daß diese in Kontakt mit dem Kommutator (8) kommen,
dadurch gekennzeichnet, daß das Arretierelement (15) ein Ring (16) mit zwei zum Verschließen der Aufnahmevorrichtungen (12) vorgesehenen Vorsprüngen (18) ist, welcher zwischen der ersten und der zweiten Position drehbar gelagert ist und axial fest mit der Platte (10) verbindbare Teile (20) und einen Mitnehmerzapfen (21) aufweist, so daß er in die Position, in welcher die Bürsten (11) gelöst sind, verstellbar ist.

2. Elektromotor nach Anspruch 1, dadurch gekennzeichnet, daß der Ring (16) einen radialen Arm (19a), von welchem ein in einen mit einer Randleiste (23) der Platte (10) zusammenwirkenden Haken (20) endender axialer Arm (19b) ausgeht, sowie den Mitnehmerzapfen (21) aufweist.

3. Elektromotor nach Anspruch 1 oder 2, dadurch gekennzeichnet, daß dieser eine Halteplatte (28) für ein Lager (9b) der Welle (6) aufweist, welche zur Verstellung des Arretierelements (15) in die Position, in welcher die Bürsten gelöst sind, mit diesem Arretierelement (15) zusammenwirkt.

4. Elektromotor nach Anspruch 3, dadurch gekennzeichnet, daß die Platte (28) eine Öffnung (30) zur Aufnahme des freien Endes des Mitnehmerzapfens (21)des Arretierelements (15) aufweist.

5. Elektromotor nach Anspruch 3, dadurch gekennezeichnet, daß die Platte (28) mittels eines Bajonettverschlusses mit der Platte (10) verbunden ist.

6. Elektromotor nach Anspruch 5, dadurch gekennzeichnet, daß der Bajonettverschluß mindestens aus zwei von der Platte (10) ausgehenden Haken (26) besteht, in welche zwei Klauen (27) der Platte (28) eingreifen.

7. Elektromotor nach Anspruch 6, dadurch gekennzeichnet, daß die Platte (28) in der Form einer Tellerfeder ausgebildet ist.


**Claims**

1. An electric motor comprising a housing (1) in which are disposed a yoke (4), permanent magnets (5) and an armature (7) integral with a shaft (6) also carrying a commutator (8), and a plate (10) fixed to the housing (1) and carrying brushes (11) biased by elastic means (13, 14) radially toward the commutator, said motor further comprising a sub-assembly comprising the brush-carrying plate (10), brushes (11) disposed in roughly radial cavities (12) in said plate (10), springs (13) biasing the brushes radially toward the axis (X-X) of the motor, support members (14) for the springs (13) fixed on the plate (10) and a retaining element (15) for temporarily retaining the brushes which, in a first position, closes the inner ends of said cavities (12) and maintains the brushes (11) in a withdrawn position and which, in a second position, releases the brushes (11) and allows them to come into contact with the commutator (8), characterised in that the retaining element (15) is a ring (16) carrying two axial tabs (18) adapted to close said cavities (10) and mounted to be rotatable between said first and second positions and including means (20) rendering it axially fixed relative to the plate (10) and a driving pin (21) for bringing it to the position for releasing the brushes (11).

2. a motor according to claim 1, characterised in that the ring (16) carries a radial arm (19a) from which extends an axial arm (19b) terminating in a hook (20) cooperating with a flange (23) of the plate (10), and the driving pin (21).

3. A motor according to claim 1 or 2, characterised in that it comprises a disc (28) maintaining a bearing (9b) of the shaft (6) which cooperates with the retaining element (15) for bringing it to its position for releasing the brushes.

4. A motor according to claim 3, characterised in that the disc (28) has an orifice (30) in which is received the free end of the driving pin (21) of the retaining element (15).

5. A motor according to claim 3, characterised in that the disc (28) is connected to the plate (10) by a connection of the bayonet type.

6. A motor according to claim 5, characterised in that the bayonet connection is constituted by at least two hooks (26) extending from the plate (10) and on which come into engagement two lugs (27) of the disc (28).

7. A motor according to claim 6, characterised in that the disc (28) is arranged in the form of a diaphragm spring.

## FIG.1

## FIG.7

FIG.3

FIG.2

0 148 702

**FIG.4**

-28-

21

30

1    1

**FIG.5**

6

-28-

27

26

6

**FIG.6**

26

8

21    20